(19) Europäisches Patentamt
European Patent Office
Office européen des brevets

(11) Numéro de publication: **0 175 608**
**B1**

# (12) FASCICULE DE BREVET EUROPEEN

(45) Date de publication du fascicule du brevet: **26.10.88**

(51) Int. Cl.⁴: **C 08 L 95/00**, C 10 C 3/02, C 08 G 81/02

(21) Numéro de dépôt: **85401667.2**

(22) Date de dépôt: **21.08.85**

(54) **Procédé de préparation d'une composition notamment pour enrobés hydrocarbonés à base de liant hydrocarboné et de polyoléfine.**

(30) Priorité: **22.08.84 FR 8413077**

(43) Date de publication de la demande: **26.03.86 Bulletin 86/13**

(45) Mention de la délivrance du brevet: **26.10.88 Bulletin 88/43**

(84) Etats contractants désignés: **AT BE CH DE FR GB IT LI LU NL SE**

(56) Documents cités:
**FR - A - 2 284 653**
**FR - A - 2 495 625**
**US - A - 4 404 316**

**JOURNAL POLYMER SCIENCE, SYMPOSIUM no. 50, 1975, pages 181-188, John Wiley & Sons, Inc.; A. CHAPIRO: "Mechanism of peroxidation of solid polymers as derived from the kinetics of the induced graft copolymerization"**
**"Graft Copolymers", H.A.J. BATTAERD and G.W. TREGEAR, 1967, Interscience Publishers, pp. 54-67**

(73) Titulaire: **SCREG ROUTES ET TRAVAUX PUBLICS, Immeuble Neuilly-Défense 46-52 rue Arago, F-92817 PuteauxCédex (FR)**

(72) Inventeur: **Pietrasanta,Yves, Synd. Intercom. du Nord du Bassin de Thau, Mairie de Mèze F-34140 Mèze (FR)**
Inventeur: **Maliszewicz, Marc, Résidence Carneaux 6 Rue Danielle Casanova, F-77380 Combes-la-Ville (FR)**
Inventeur: **Boutevin, Bernard, 1 Rue Anselme Mathieu "Les Terres Blanches", F-34000 Montpellier (FR)**
Inventeur: **Robin, Jean-Jacques, Bâtiment C4 - Cité Croix d'Argent, F-34000 Montpellier (FR)**

(74) Mandataire: **Bressand, Georges et al, c/o CABINET LAVOIX 2 Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 175 608 B1

## Description

La présente invention a pour objet une composition, notamment pour enrobés hydrocarbonés, à base d'un mélange de liant hydrocarboné et de polyoléfine partiellement liés préparée par réaction radicalaire.

L'incorporation de polymères dans les bitumes, brais de houille et asphaltes a fait l'objet de nombreuses applications industrielles. On peut citer les brevets concernant les mélanges de polydiènes ou de leur copolymères éventuellement modifiés (par exemple FR-A 7 627 937, FR-A 7 630 316, FR-A 7 806 160), les brevets faisant mention de l'utilisation de PVC dans les brais de houille (FR-A 2 228 894 et FR-A 2 549 794). D'autres polymères ont été utilisés tels le polypropylène (par exemple les brevets FR-A 2 436 160, FR-A 2 464 138). Des copolymères ont aussi été proposés pour cette application. Cependant, la famille de polymères qui a fait l'objet du plus grand nombre de travaux est celle des polyéthylènes. Ceux-ci ont été utilisés seuls, modifiés chimiquement ou encore, en mélange avec d'autres polymères (par exemple FR-A 2 495 625, FR-A 2 476 661, FR-A 2 284 653 et EP-A 0 028 106 et EP-A 0 031 235).

Toutes ces études avaient deux objets principaux, à savoir l'amélioration des propriétés mécaniques globales du bitume ou de ses homologues, et la modification de la susceptibilité thermique des enrobés afin de permettre l'utilisation de ces produits dans une plus large plage de température. Or le problème majeur de l'addition du polymère dans les bitumes est l'augmentation importante de la viscosité, celle-ci étant un facteur négatif dans la fabrication des enrobés car pour la diminuer il est nécessaire de mettre en œuvre des températures élevées qui provoquent la dégradation du polymère. Un autre facteur négatif est la démixion des liants lors de leur stockage. En effet, d'une manière générale les interactions bitume-polymère ne sont pas suffisantes pour compenser les forces de gravitation.

La présente invention permet de concilier les avantages et les inconvénients rencontrés dans l'art antérieur. Elle propose un produit nouveau comportant des liaisons de covalence entre un liant hydrocarboné et une partie ou la totalité d'un polymère, obtenues par création de radicaux sur une polyoléfine qui par transfert se greffent sur le liant hydrocarboné.

L'invention a donc pour objet une composition notamment pour enrobés hydrocarbonés comprenant un mélange de liant hydrocarboné et de polyoléfine, composition caractérisée en ce qu'au moins une partie des molécules de liant hydrocarboné sont liées chimiquement aux molécules de polyoléfine par des liaisons covalentes.

Le liant hydrocarboné peut-être du bitume, du brai de houille, de l'asphalte, etc..., en particulier du bitume.

La polyoléfine peut être constituée indifféremment par du polypropylène ou du polyéthylène, haute densité, basse densité, linéaire ou leurs mélanges, utilement des produits de récupération. La proportion de polyoléfine dans le mélange peut être de 1 à 50% en poids, et de préférence de 5 à 40% en poids.

Les compositions selon l'invention sont obtenues en deux opérations, (a) par création de radicaux libres sur la polyoléfine puis (b) réaction de la polyoléfine ainsi activée sur le liant hydrocarboné.

La création des radicaux peut se faire:

- soit directement par action de rayons gamma sur la polyoléfine (en l'absence d'oxygène), puis par action de l'oxygène sur les radicaux préparés par la methode précédente,
- soit indirectement par décomposition thermique de peroxydes ou hydroperoxydes obtenus par l'action conjuguée de l'ozone et de l'oxygène sur la polyoléfine. Le principe de cette réaction est connue et consiste à arracher un atome d'hydrogène labile (carbone tertiaire ou carbone en alpha d'un groupement attracteur) et à conduire à la formation d'un radical. Ce radical réagit sur l'oxygène pour donner un radical peroxy qui peut, soit amener à la formation d'un hydroperoxyde macromoléculaire, soit donner des peroxydes. Le mécanisme généralement évoqué est le suivant:

| | | |
|---|---|---|
| Amorçage | $PH + O_3$ ou $\gamma$ ou $e^-$ | $P^* +$ Produits |
| Propagation | ($P^* + O_2$ | $POO^*$ |
| | ( | |
| | ($POO^* + PH$ | $POOH + P^*$ hydroperoxyde |
| | ( | |
| Terminaison | $POO^* + P^*$ | $POOP$ (peroxyde) |

Dans ce schéma P représente la polyoléfine.

Lorsque'on effectue cette réaction avec l'oxygène et l'ozone (oxygène ozonisée, par exemple 25 mg d'ozone par 1 d'oxygène), on fait passer le courant d'oxygène et d'ozone sur la polyoléfine à l'état divisé, de préférence à une température de 30 à 90°C, ou sur une solution ou une suspension de la polyoléfine dans un solvant. Par exemple, l'ozonisation d'un polyéthylène basse densité en poudre peut être effectuée sous lit fluidisé, à des températures de l'ordre de 60°C et pendant des temps de réaction compris entre 1 heure et 3 heures. La polyoléfine ozonisée est dosée soit par iodométrie soit par un dosage colorimétrique après réaction avec le diphénylpicryl-hydrazyle (D.P.P.H.)

On obtient des concentration en oxygène actif (peroxydes et hydroperoxydes confondus) de 1 à $15 \times 10^{-5}$ équivalent par gramme, ce qui correspond à environ 0.2 à 10 groupements peroxydiques par chaîne de polymère. Lorsque l'on utilise du polyéthylène de récupération, il s'agit de sacs broyés en particules d'environ 2 mm de diamètre. L'ozonisation est conduite de la même manière mais les taux d'hydroperoxydes et de peroxydes obtenus sont d'environ moitié moins élevés que dans le cas précédent.

Par ailleurs on a déterminé par chromatographie sur gel perméable (GPC) une chute d'environ la moitié de la masse moléculaire due à des coupures de la chaîne de la polyoléfine, mais pas de dégradation importante.

La seconde étape de préparation des compositions selon l'invention est un procédé nouveau et consiste à faire réagir la polyoléfine activée sur le liant hydrocarboné, afin de réaliser des liaisons covalents (du type C-O-C) par transfert des radicaux libres de la polyoléfine sur le liant. Si l'on utilise la méthode indirecte précédemment décrite on ajoute la polyoléfine peroxydée et hydroperoxydée, (le cas échéant ozonisée) au liant hydrocarboné et on chauffe le mélange sous agitation, par exemple entre 120° et 220°C, pour créer les radicaux libres qui réagissent pour former les produits nouveaux selon l'invention. Ceci est confirmé par GPC montrant une forte augmentation de la masse moléculaire. A titre d'exemple, le polyéthylène ozonisé peut être ajouté lentement à du bitume maintenu à environ 160° à 180°C et malaxé pendant environ une demi-heure.

Les compositions ainsi obtenues constituent un nouveau matériau, en fait un nouveau liant, qui peut être utilisé en tant que tel ou bien en mélange avec d'autres matériaux tels que les granulats minéraux, notamment pour obtenir les enrobés. Ceux-ci sont habituellement préparés, en particulier par les constructeurs de routes, par addition du liant aux graves préchauffées, par exemple à 200°C. Il est évidemment possible d'ajouter la polyoléfine activée, éventuellement ozonisée, directement au liant hydrocarboné déjà mélangé avec des granulats minéraux et chauffé, et d'obtenir ainsi l'enrobé, sans pour cela sortir du cadre de la présente invention.

L'exemple suivant illustre la préparation des compositions selon l'invention.

Exemple 1

a) Ozonisation du polyéthylène.

On fait passer 400 l. d'oxygène ozonisée (25 mg/l d'ozone) en 1 heure sur 100 g. de poudre de polyéthylène basse densité, ayant un indice de fluidité (IF) de 70 (selon la norme NFT 51016 ou la norme des USA ASTM-D1238), chauffé à 60°C, sous lit fluidisé. On effectue le dosage du polyéthylène ozonisé ainsi obtenu par le DPPH; on trouve $5 \times 10^{-5}$ éq./g d'hydroperoxyde,

b) Composition de liant.

A 90 parties en poids de bitume 180/220 (selon la norme AFNOR 66004) porté à 180°C on ajoute lentement, tout en malaxant à 10 000 t/mn avec un appareil «Ultra-Turrax», 10 parties en poids de poudre de polyéthylène ozonisé obtenu ci-dessous. Au bout de 15 mn. on réduit la vitesse de malaxage à 7000 t/mn et on laisse tourner encore 90 mn. La composition de liant obtenue est prête à l'emploi. Ses caractéristiques physiques sont rassemblées dans les tableaux I et II suivants.

Le produit comparatif est obtenu de la même manière, mais à partir de polyéthylène non-ozonisé.

c) Enrobé.

A 100 parties en poids de basalte «CTSO» (de la Société Nouvelle de Travaux du Sud-Ouest) ayant la composition granulométrique (en mm) 6/10 = 26%, 2/6 = 32%, 0/2 = 42%, portées à 200°C, on ajoute pendant 30 s. 5,6 parties en poids d'une composition de liant obtenue suivant b) mais à partir de 1,6 parties en poids de polyéthylène ozonisé et 4 parties en poids de bitume 60/70 (AFNOR 66004), tout en malaxant à vitesse lente à 180°C. On obtient un enrobé routier dont les caractéristiques physiques sont rassemblées dans les tableaux 3 et 5 suivants.

Le produit comparatif est obtenu de la même manière, mais à partir de polyéthylène non-ozonisé.

Exemple 2

a) L'ozonisation a été effectuée de la même manière que dans l'exemple 1 a), mais à partir d'un polyéthylène ayant une IF = 20. Le dosage par le DPPH indique $8 \times 10^{-5}$ éq/g d'hydroperoxyde. La masse moléculaire moyenne en nombre (Mn) trouvée par GPC est de 6100 (celle du polyéthylène de départ ayant été trouvée 13 700).

b) Une composition de liant est préparée à partir du polyéthylène ozonisé obtenu ci-dessus, de la même manière que dans l'exemple 1 b). On mesure par GPC Mn = 12 900.

c) Un enrobé a été préparé à partir de cette composition de liant, comme dans l'exemple 1.

Les caractéristiques physiques sont rassemblées dans les tableaux suivants.

Les propriétés mécaniques et rhéologiques, en particulier la viscosité et les performances mécaniques de la composition et des enrobés obtenus selon l'invéntion ont été étudiées. Dans tous les essais, les produits obtenus selon l'invention ont été comparés avec ceux de l'état de la technique, les préparations étant effectuées dans des conditions rigoureusement identiques. Compte tenu du tonnage important de polyéthylène (PE) produit et de son faible coût, et compte tenu également de l'importance des déchets qui en découlent, ce polymère a été étudié plus particulièrement, aussi bien à l'état dit «noble» qu'à l'état dit de «déchet» (PE de récupération).

Le tableau I ci-après donne les viscosités mesurées sur des compositions obtenues à partir de bitume et PE ozonisé ou non. On observe de façon très nette une chute de la viscosité lorsque l'on remplace le polyéthylène par son homologue ozonisé, et ceci quel que soit la nature du polyéthylène. Ceci est sans aucun doute l'un des points les plus importants de l'invention car la mise en œuvre industrielle nécessite des viscosités les plus basses possibles.

Les courbes classiques de tenacité et de ductilité des compositions ont également été étudiées et les valeurs correspondantes sont rassemblées dans le tableau II. On constate que l'addition de PE ozonisé ou non augmente la tenacité par rapport au bitume seul et que cet effet est d'autant plus important que la température est élevée (entre 5 à 10 fois plus élevée à 25° qu'à 15°C). En ce qui concerne la ductilité, l'addition de polymère a l'effet inverse. En effet, on a une augmentation de la rigidité surtout pour le PE haute densité, mais on observe par contre, qu'à température élevée, les écarts avec le bitume diminuent. D'une manière générale les compositions de liants selon l'invention possèdent des propriétés nettement améliorées qu'il s'agisse de la ductilité ou de la tenacité.

Les performances mécaniques des enrobés obtenues à partir des compositions selon l'invention ont été étudiées par la mesure des modules d'élasticité en flexion. Les résultats et les conditions opératoires sont reportés sur le tableau III. On constate, tout comme dans le cas des compositions de liant, que l'introduction de 30% environ de polymère dans le liant augmente fortement les modules d'élasticité et que cette augmentation est beaucoup plus importante lorsque la composition de liant a été préparée à partir de polymère ozonisé. On peut donc dire que l'introduction de compositions de liants selon l'invention dans les enrobés doit permettre une meilleure résistance de l'enrobé aux contraintes élevées.

Dans le but d'étudier l'adhésivité des nouveaux liants sur les granulats, on a mesuré qualitativement la mouillabilité du liant sur des granulats, l'enrobé correspondant ayant été maintenu 16 heures à 60°C dans de l'eau. La quartzite est réputée comme étant un matériau peu apte à l'enrobage par des liants organiques. Dans le tableau IV ci-après, on a porté les notes obtenues lors de ce test. On constate que le bitume et le mélange bitume-PE présentent une faible adhésivité passive (20% vis à vis des quartzites). L'utilisation de PE ozonisé améliore fortement l'adhésivité des liants, puisque les granulats restent parfaitement recouverts de liant. Par ailleurs la mouillabilité est confirmée par des essais de compacité sur les enrobés comme le montrent les résultats rassemblés dans le tableau V. On peut constater que le taux de remplissage d'un enrobé au bitume traditionel est inférieur à celui d'un enrobé bitume-PE classique, qui lui-même est inférieur à son homologue ozonisé. Ceci a pour conséquence une compacité élevée, dans l'ordre du pourcentage de remplissage. Les résistances à la compression varient dans le même sens que les compacités et on observe également une diminution d'absorption d'eau pour les enrobés contenant du bitume et du PE ozonisé.

Ces divers résultats montrent que les compositions de liants hydrocarbonés et de polyoléfines liés selon l'invention ont des propriétés nettement supérieures à celles des simples mélanges selon l'état de la technique, et en particulier une viscosité inférieure, des propriétés mécaniques supérieures et une adhésivité supérieure. Elles peuvent être utilisées dans les enrobés hydrocarbonés, notamment routiers, les éléments préfabriqués, sols industriels, chapes, produits d'étanchéité (mastics, joints).

Dans les tableaux I à V les abréviations et normes suivantes sont utilisées:

- PE : polyéthylène (oz:ozonisé)
- Bd : basse densité
- Hd : haute densité
- récup. : récupération
- IF : indice de fluidité (selon la norme NFT 51016; ou USA : ASTM-D1238)
- 180/220, 60/70 : types de bitume (selon la norme AFNOR 66004)

Tableau I
Viscosité (mPa/s) des compositions

| Liant | Bitume 180/220 seul | Bitume + PE Bd IF = 70 | Bitume + PE Bd IF = 70 oz. | Bitume + PE Bd IF = 20 | Bitume + PE Bd IF = 20 oz. | Bitume + PE récup. | Bitume + PE récup. oz. | Bitume + PE Hd | Bitume + PE Hd oz. |
|---|---|---|---|---|---|---|---|---|---|
| 150° C | 140 | 770 | 500 | 1740 | 520 | 1500 | 1000 | 2600 | 1660 |
| 160° C | 100 | 510 | 300 | 1320 | 390 | 900 | 820 | 1920 | 1300 |
| 170° C | 80 | 400 | 240 | 1000 | 310 | 630 | 600 | 1660 | 850 |
| 180° C | 60 | 300 | 200 | 770 | 210 | 480 | 420 | 1300 | 680 |

Notes:
- Les viscosités ont été mesurées à l'aide d'un appareil RHEOMAT 30 de la Société CONTRAVES.
- Les compositions comprennent 10% en poids de polyéthylène par rapport au mélange.

Tableau II
Mesure de la Ténacité et de la Ductilité des compositions de liants

| Liant | | Bitume 180/220 | Bitume + PE Bd IF = 20 | Bitume + PE Pd IF = 20 ozonisé | Bitume + PE Hd | Bitume + PE Hd ozonisé |
|---|---|---|---|---|---|---|
| Ténacité (dN) | 15° C | 31 | 33,2 | 41,6 | 36 | 48 |
| | 25° C | 2 | 8,3 | 11,3 | 20 | 19 |
| Ductilité (mm) | 15° C | 93 | 22 | 28 | - | - |
| | 25° C | 93 | 42 | 82 | - | - |

Tableau III
Evolution du module d'élasticité (en GPa = $10^9$ Pa) d'enrobés en fonction de la Température.

| Liant | Bitume 60/70 (témoin) | Bitume 60/70 + PE Bd IF = 70 ozonisé | Bitume 60/70 + PE Bd IF = 70 | Bitume 60/70 + PE récup. ozonisé | Bitume 60/70 + PE récup. |
|---|---|---|---|---|---|
| 10° C | 0,088 | 0,407 | 0,191 | 0,462 | 0,39 |
| 15° C | 0,055 | 0,235 | 0,051 | 0,253 | 0,113 |
| 25° C | 0,016 | 0,182 | 0,043 | 0,130 | 0,1 |

Notes:
- l'enrobé témoin comprend 5,6% de bitume 60/70
- les enrobés à base de bitume et de PE contiennent 4% de bitume 60/70 et 1,6% de PE.
- les tests ont été effectués sur des barreaux d'enrobés de 4 × 4 × 20 cm.

Tableau IV
Essais d'adhésivité des compositions de liants avec la Quartzite selon le mode opératoire $RLA_1$ du Laboratoire Central des Ponts et Chaussées

| Liant | Quartzite + Bitume 180/220 | Quartzite + Bitume + PE Bd IF = 70 | Quartzite + Bitume + PE Bd IF = 70 ozonisé | Quartzite + Bitume + PE récup. | Quartzite + Bitume + PE Récup. ozonisé |
|---|---|---|---|---|---|
| 60° C | 20% | 20% | 100% | 20% | 100% |

Notes:
- taux de liant: 5% en poids par rapport aux granulats.
- le test consiste à visualiser le taux de désenrobage lorsque l'enrobé est stocké dans de l'eau à 60° C et ce, durant 16 heures. La note de 100% est attribuée à un enrobé dont les arêtes et les surfaces sont entièrement recouvertes de liant. Au contraire, la note 0 est donnée à un enrobé pour lequel le liant s'est séparé du matériau minéral.

Tableau V
Evolution de la compacité de divers enrobés.

| Enrobé | Granulat + Bitume 60/70 | Granulat + Bitume 60/70 + PE Bd IF = 70 | Granulat + Bitume 60/70 ozonisé |
|---|---|---|---|
| Taux de remplissage | 58% | 67% | 71% |
| Compacité | 92% | 93% | 94% |
| Résistance en compression à sec à 18° C | $86 \times 10^5$ Pa | $79 \times 10^5$ Pa | $101 \times 10^5$ Pa |
| Résistance en compression après 7 heures d'immersion dans l'eau | $81 \times 10^5$ Pa | $77 \times 10^5$ Pa | $103 \times 10^5$ Pa |
| Absorption d'eau à 7 jours | 4% | 3% | 2,5% |

Notes:
- Granulat (Vignat):

| | |
|---|---|
| 6/10 (mm) | 29% |
| 2/6 | 35% |
| 0/2 | 34% |
| Filler (calcaire passant au tamis 80 μm) | 2% |

- Composition du liant: 5,6% par rapport aux granulats dont 1,6% de PE

**Revendication**

1. Procédé de préparation d'une composition notamment pour enrobés hydrocarbonés comprenant un mélange de liant hydrocarboné et de polyoléfine, au moins une partie des molécules de liant hydrocarboné étant liées chimiquement aux molécules de polyoléfine par des liaisons covalentes, caractérisé en ce que (a) l'on crée des radicaux libres sur la polyoléfine
- soit directement par action de rayons gamma, puis par action de l'oxygène sur les radicaux préparés par la méthode précédente
- soit indirectement, par décomposition thermique de peroxydes et d'hydroperoxydes obtenus par l'action conjuguée de l'ozone et de l'oxygène sur la polyoléfine, puis (b) on fait réagir la polyoléfine ainsi activée sur le liant hydrocarboné.

2. Procédé selon la méthode indirecte de la revendication 1, caractérisé en ce que l'on fait réagir de l'oxygène ozonisée sur la polyoléfine à une température de 30 à 90°C puis on ajoute la polyoléfine ozonisée ainsi obtenue au liant hydrocarboné sous agitation, à une température entre 120 et 220°C.

3. Procédé selon la revendication 1 ou 2, caractérisé en ce que le liant hydrocarboné est du bitume.

4. Procédé selon l'une quelconque des revendications 1à 3, caractérisé en ce que la proportion de polyoléfine dans le mélange est de 1 à 50% en poids.

5. Procédé selon la revendication 4, caractérisé en ce que la proportion de polyoléfine dans le mélange est de 5 à 40% en poids.

6. Procédé selon l'une quelconque des revendications 1 à 5, caractérisé en ce que la polyoléfine est du polyéthylène.

7. Application de la composition obtenue selon l'une quelconque des revendications précédentes pour la fabrication d'enrobés hydrocarbonés tels que des enrobés routiers, sols industriels, chapes et produits d'étanchéité.

**Patentansprüche**

1. Verfahren zur Herstellung einer Verbindung insbesondere für Kohlenwasserstoff-Beschichtungsmassen, die aus einem Gemisch von Kohlenwasserstoff-Bindemittel und Polyolefin besteht, wobei mindestens ein Teil der Kohlenwasserstoffbindemittel-Moleküle chemisch an die Polyolefinmoleküle durch kovalente Bindungen gebunden ist, dadurch gekennzeichnet, dass (a) an dem Polyolefin freie Radikale erzeugt werden, und zwar
- entweder direkt durch Einwirkung von Gammastrahlen und anschliessend durch Einwirkung von Sauerstoff auf die nach der vorhergehenden Methode hergestellten Radikale
- oder indirekt durch thermische Zersetzung von Peroxiden und Hydroperoxiden, die durch gekoppelte Einwirkung von Ozon und Sauerstoff auf das Polyolefin erhalten wurden, und dass man anschliessend (b) das auf diese Weise aktivierte Polyolefin mit dem Kohlenwasserstoffbindemittel reagieren lässt.

2. Verfahren nach der indirekten Methode nach Anspruch 1, dadurch gekennzeichnet, dass man ozonisierten Sauerstoff mit dem Polyolefin bei einer Temperatur von 30 bis 90° reagieren lässt und anschliessend das auf diese Weise erhaltene ozonisierte Polyolefin dem Kohlenwasserstoff-Bindemittel unter Rühren bei einer Temperatur von 120 bis 220°C beigibt.

3. Verfahren nach Anspruch 1 oder 2, dadurch gekennzeichnet, dass das Kohlenwasserstoff-Bindemittel Bitumen ist.

4. Verfahren nach einem der Ansprüche 1 bis 3, dadurch gekennzeichnet, dass der Anteil an Polyolefin in dem Gemisch 1 bis 50 Gewichtsprozent beträgt.

5. Verfahren nach Anspruch 4, dadurch gekennzeichnet, dass der Anteil an Polyolefin in dem Gemisch 5 bis 40 Gewichtsprozent beträgt.

6. Verfahren nach einem der Ansprüche 1 bis 5, dadurch gekennzeichnet, dass das Polyolefin Polyäthylen ist.

7. Anwendung der in dem Verfahren nach einem der vorhergehenden Ansprüche erhaltenen Verbindung für die Herstellung von Kohlenwasserstoff-Beschichtungsmassen wie Strassenbeläge, Industrieböden, Estriche und Dichtungsprodukte.

**Claims**

1. A proces for preparing a composition, particularly for hydrocarbon asphalts, comprising a mixture of hydrocarbon binder and polyolefin, wherein at least some of the hydrocarbon binder molecules are chemically bound to the polyolefin molecules by covalent bonds, characterised in that (a) free radicals are created on the polyolefin
- either directly by the action of gamma rays, followed by the action of oxygen on the radicals prepared by the preceding method,
- or indirectly by thermal decomposition of peroxides and hydroperoxides obtain by the combined action of ozone and oxygen on the polyolefin, and (b) the polyolefin thus activated is then reacted with the hydrocarbon binder.

2. A process according to the indirect method claimed in claim 1, characterised in that ozone and oxygen is reacted with the polyolefin at a temperature of 30–90°C, after which the resulting ozonized polyolefin is added to the hydrocarbon binder, with stirring, at a temperature between 120 and 220°C.

3. A process as claimed in claim 1 or 2, characterised in that the hydrocarbon binder is bitumen.

4. A process as claimed in any of claims 1 to 3, characterised in that the amount of polyolefin in the mixture is from 1–50 wt%.

5. A process as claimed in claim 4, characterised in that the amount of polyolefin in the mixture is from 5–40 wt%.

6. A process as claimed in any one of claims 1–5, characterised in that the polyolefin is polyethylene.

7. Use of the composition prepared in any of the preceding claims for the production of hydrocarbon coating mixtures such as road asphalts, industrial floors, covering layers and sealing materials.